# EUROPEAN PATENT APPLICATION

(11) **EP 4 253 084 A1**
(43) Date of publication of application: **04.10.2023**
(21) Application number: 23164327.1
(22) Date of filing: 27.03.2023
(51) Int. Cl.: B60C 7/14, B60C 7/24, B60B 25/04

(54) **NON-PNEUMATIC TIRE OR WHEEL WITH REINFORCED RUBBER SPOKES**

(30) Priority: 30.03.2022 US 202217657230
(71) Applicant: The Goodyear Tire & Rubber Company, Akron, OH 44316 (US)
(72) Inventor: HINQUE, Daniel Paul Luc Marie, B-6720 Habay-la-Neuve (BE)
(74) Representative: Kutsch, Bernd

(57) **Abstract**

A non-pneumatic tire (100) is disclosed having a tire axis, a first side and a second side. The tire (100) comprises an outer ring structure (102) with a tread (112) extending circumferentially around the tire axis, the outer ring structure extending from the first side (106a) to the second side (106b) and comprising a first support ring (104a) on the first side and a second support ring (104b) on the second side, the first and second support rings being coaxial around the tire axis; an inner ring structure comprising a first base ring (110a) on the first side and a second base ring (110b) on the second side, the first and second base rings being coaxial around the tire axis; and a connecting structure to transfer load from the inner ring structure to the outer ring structure, the connecting structure including first and second spokes (114a, 114b) made of reinforced rubber. Each of the first spokes (114a) extends from the first support ring (104a) to the second base ring (110b) and is connected with the first support ring and with the second base rings. Each of the second spokes (114b) extends from the second support ring (104b) to the first base ring (110a) and is connected with the second support ring and with the first and second base rings. The first and second spokes (114a, 114b) are inclined with respect to the tire axis.

## Description

### Background of the Invention

The present invention relates generally to a vehicle tire and, more particularly, to a non-pneumatic tire with support rings and spokes made of reinforced rubber. In a further aspect, the invention relates to a wheel comprising such a non-pneumatic tire.

The pneumatic tire has been the solution of choice for vehicular mobility for over a century and is still dominant on the tire market today. Pneumatic tires are efficient at carrying loads because all of their structure participates in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid (e.g., air or an inert gas). A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tirelike performance would be a desirous improvement.

Non pneumatic tires are typically defined by their load carrying efficiency. So-called "bottom loaders" are essentially rigid structures that carry a majority of the load in the portion of the structure below the hub. "Top loaders" are designed so that all of the structure participates in carrying the load. Top loaders thus have a higher load carrying efficiency than bottom loaders, allowing a design that has less mass.

Non pneumatic tires, particularly those that are "top loaders" typically have a shear band. A shear band while allowing the tire to have higher load carrying efficiency, have the disadvantage of increased weight and decreased rolling resistance. Thus, it is desired to have an improved nonpneumatic tire that omits a shearband and is useful for consumer or commercial truck applications.

### Summary of the Invention

The invention relates to a non-pneumatic tire in accordance with claim 1 and to a wheel in accordance with claim 7 or 13 respectively.

Dependent claims refer to preferred embodiments of the invention.

In a preferred embodiment, the non-pneumatic tire and the wheels do not include a shear band.

### Brief Description of the Drawings

The invention will be described by way of example and with reference to the accompanying drawings in which:
FIG. 1 is a perspective view of a non-pneumatic tire according to a first embodiment;
FIG. 2 is a side elevation view of the tire of FIG. 1;
FIG. 3 is a partial radial cross-sectional view of the tire of FIG. 1;
FIG. 4 is a perspective view of the radially outer support rings, the radially inner base rings, and the connecting structure of the tire of FIG. 1;
FIG. 5 is a perspective view of a non-pneumatic tire according to a second embodiment;
FIG. 6 is another perspective view of the tire of FIG. 5;
FIG. 7 is a partial radial cross-sectional view of the tire of FIG. 5;
FIG. 8 is a perspective phantom view of a pair of spokes with their reinforcement;
FIG. 9 is a cross-sectional view of a spoke;
FIG. 10 is a perspective view of a wheel with a non-pneumatic tire according to a third embodiment;
FIG. 11 is a partial radial cross-sectional view of the wheel of FIG. 10;
FIG. 12 is a perspective view of the reinforcement of the base rings, the spokes, and the support rings of the tire of FIG. 10;
FIG. 13 is a perspective view of the rim of the wheel of FIG. 10;
FIG. 14 is a perspective view of a non-pneumatic tire according to a fourth embodiment;
FIG. 15 is a partial radial cross-sectional view of the tire of FIG. 14 mounted on a rim;
FIG. 16 is a perspective view of a wheel formed by the tire of FIG. 14 and a rim; and
FIG. 17 is perspective view of the rim shown in FIGS. 15 and 16.

### Detailed Description of Preferred Embodiment of the Invention

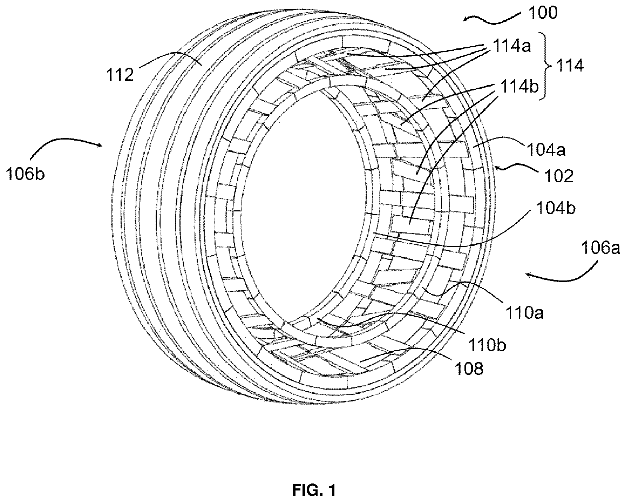

FIGS. 1-4 illustrate a first embodiment of a non-pneumatic tire 100 which does not include a shear band. The tire 100 comprises an outer ring structure 102 with a first support ring 104a on a first lateral side 106a of the tire 100 and a second support ring 104b on the second lateral side 106b of the tire. The first and second support rings 104a, 104b extend circumferentially around the tire axis, and are axially spaced apart from each other. The first and second support rings 104a, 104b are preferably resilient, and made of steel, spring steel or composite material.

The outer ring structure 102 further comprises an annular support band 108 connecting to the first support ring 104a and the second support ring 104b. The support band 108 maintains the first and second support rings 104a, 104b in substantially coaxial, parallel positions. The support band 108 has a radially outer surface on which the tread is formed as a tread band 112. The tread band 112 may include tread features such as, e.g., grooves, ribs, blocks, lugs, sipes, studs, etc. The support band includes a reinforcement layer 109 having a first end 111 that is secured to the first support ring 104a and a second end 113 that is secured to the second support ring 104b. The support band distributes forces locally exerted on the tread 112 over a larger area and yields under pressure so as to contribute to formation of a contact patch between the tread 112 and the ground. The support band 108 further includes longitudinal reinforcement 105, which wrap around each end of the annular reinforcement and function to secure the ends to the respective support ring 104a,b. The support band 108 functions to transmit the load of the tire to the support rings. The support band 108 can be in the form of a rubber band with optional reinforcements, or a metal band as a leaf spring.

The non-pneumatic tire 100 further comprises an inner ring structure including a first base ring 110a on the first lateral side106a and a second base ring 110b on the second lateral side 106b. The first and second base rings 110a, 110b are connected to the outer ring structure by a connecting structure comprising spokes 114 made of reinforced rubber strips. The spokes 114 may be divided into two sets: a first spoke 114a that is secured to the first support ring 104a and extends from the first support ring to the second base ring 110b, and is secured to the second base ring 110b, and a second spoke 114b that is secured to the second support ring 104b and extend from the second support ring to the first base ring 110a and is secured thereto. The support rings 104a, 104b receive the load exerted on the base rings 110a, 110b as tension in the spokes 114 and transfer this load to support band 108, which, in turn, transfers the load to the ground, via the tread.

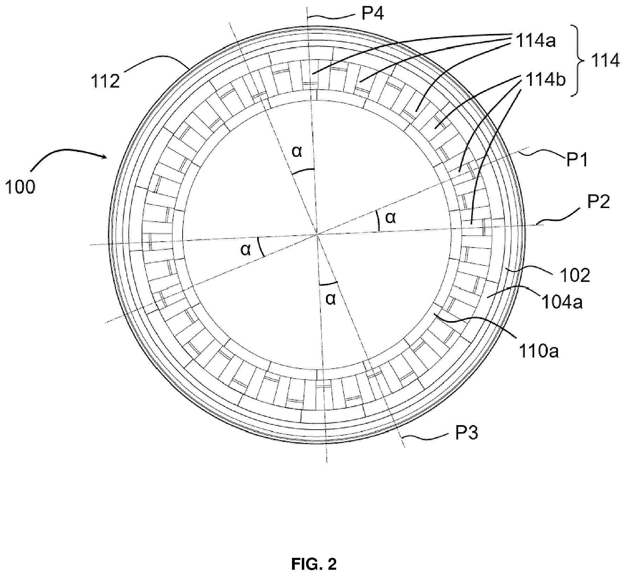

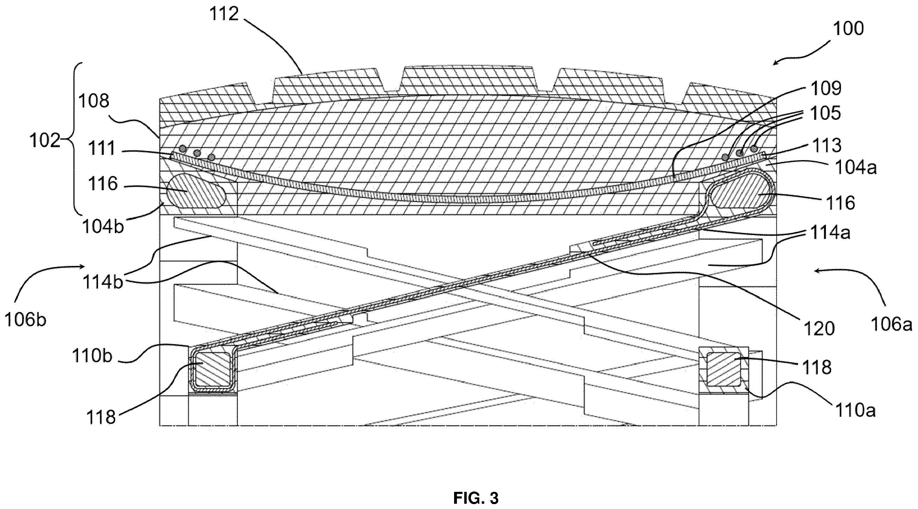

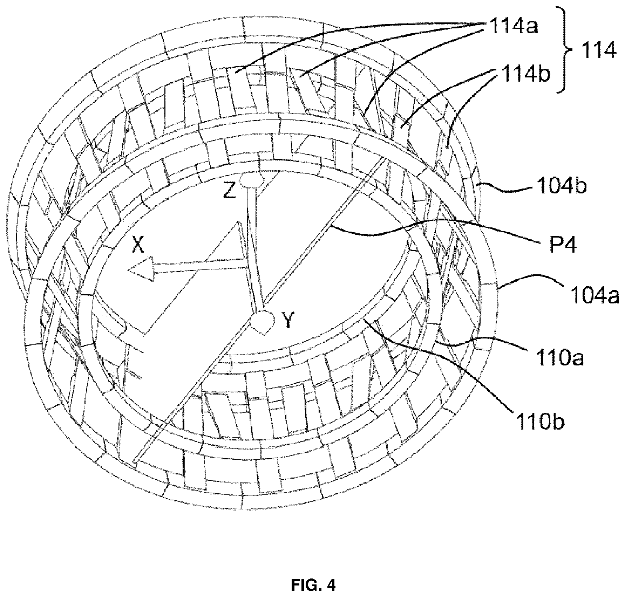

As shown in Fig 3, the first and second spokes 114a, 114b extend generally linearly and are slanted with respect to the tire axis. The spokes are arranged in an X-shaped configuration. The spokes of the first and second sets cross each other in a plane perpendicular to the tire axis located centrally between the support rings and the base rings. As best seen in FIGS 2-4, each spoke 114 extends substantially along a corresponding radial plane (i.e., a plane that contains the tire axis). In FIG. 2, four such radial planes P1, P2, P3 and P4 are shown. In circumferential direction around the tire axis (axis Y in FIG. 4), the first spokes 114a alternate with the second spokes 114b. In the illustrated embodiment, there are 36 spokes 114 in total, including 18 first spokes 114a and 18 second spokes 114b. The spokes are uniformly distributed in circumferential direction and the angular separation α between two neighboring first spokes 114a or between two neighboring second spokes 114b amounts to 20° (α = 20°).

As best shown in FIG. 3, the first spokes 114a span a truncated conical surface that is delimited in axial direction by the first support ring 104a and the second base ring 110b. Similarly, the second spokes 114b span a truncated conical surface that is delimited in axial direction by the second support ring 104b and the first base ring 110a. The conical surfaces intersect at the midplane between the support rings (or between the base rings).

As shown in Fig. 3, each first spoke 114a is formed of strips of rubber with parallel reinforcement cords 120, wherein the rubber strip has a first end wrapped around the first support ring 104a and a second end that is wrapped around the second base ring 110b. Each second spoke 114b is likewise formed of a rubber reinforced strip that has a first end wrapped about the second support ring 104b and a second end that is wrapped or secured to the first base ring 110a. The support rings 104a, 104b may each optionally comprise an inner core 116. Each inner core 116 is made of rubber, metal, steel, spring steel or a composite material that is preferably encased in rubber. Also, the base rings 110a, 110b may optionally comprise respective cores 118 made of rubber, metal, steel, spring steel or a composite material that is preferably surrounded with rubber.

The spokes are preferably arranged such that the first spokes and second spokes cross each other in a X shaped configuration when viewed from the cross-section, and without intersecting each other. The first spokes may alternate with the second spokes in circumferential direction around the tire axis.

The first and second base rings may be axially movable one with respect to the other. Tension within the first and second spokes may be adjustable by axially moving the first and second base rings one with respect to the other.

In embodiments, the first and second spokes may have inclination angles between 10 and 60°, preferably between 15° and 50°, more preferably between 15° and 45°, with respect to the tire axis.

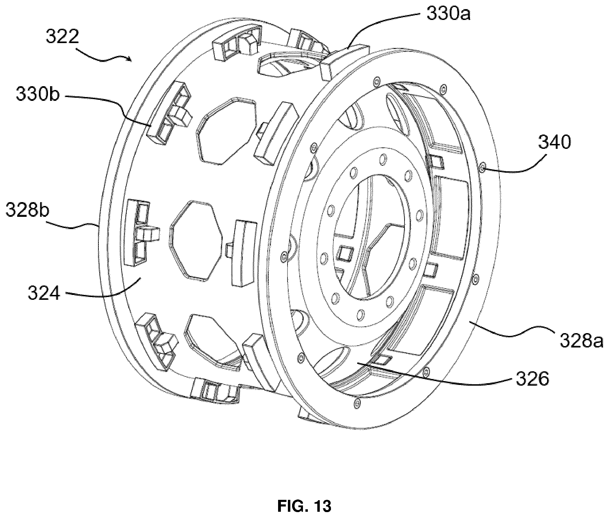

The tire 100 may be mounted on a rim shown in Fig. 13. The rim may comprise a first axially inner abutment and a first axially outer abutment for securing the first base ring in a first axial position on the rim and a second axially inner abutment and a second axially outer abutment for securing the second base ring in a second axial position on the rim. The first and second spokes are pretensioned when the first and second base rings are secured in the first and second axial positions which result in the first and second base rings being pulled axially outwards. The rim may include a removable or fixed median ring providing the first and second axially inner abutments. The rim may include a disk for fixing the rim on an axle.

When the first spokes extend from the first support ring to the second base ring and the second spokes extend from the second support ring to the first base ring, the first and second base rings may be secured in the first and second axial positions against tension forces in the first and second spokes tending to move the first and second base rings axially closer together. The rim may further include a clamp to secure the first base ring between the first axially inner abutment and the first axially outer abutment, and a second clamp to secure the second base ring between the second axially inner abutment and the second axially outer abutment.

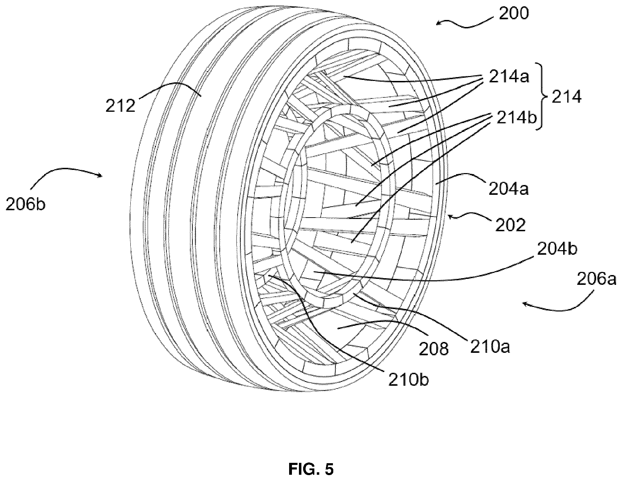

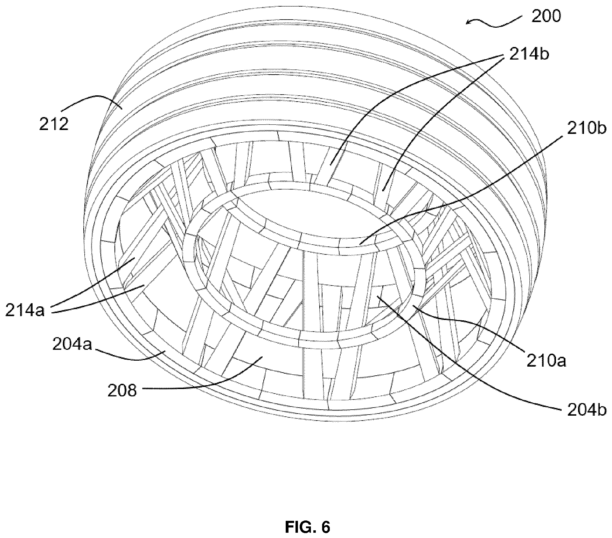

FIGS. 5 to 9 illustrate a second embodiment of a non-pneumatic tire 200 of the present invention. In this embodiment, the spokes are not coplanar, ie, extend in a radial plane as the first embodiment. The tire 200 of this embodiment like the first embodiment also includes an outer ring structure 202 with a first support ring 204a on the first lateral side 206a of the tire 200 and a second support ring 204b on the second lateral side 206b of the tire. The first and second support rings 204a, 204b extend circumferentially around the tire axis, one at an axial distance from the other. The outer ring structure 202 further comprises a support band 208 extending in the axial direction of the tire 200 and connecting the first support ring 204a with the second support ring 204b. The support band 208 maintains the first and second support rings 204a, 204b in substantially coaxial, parallel positions.

The support band 208 has a radially outer surface having a tread band 212. The support band 208 includes an annular reinforcement 209 extending from the first support ring 204a to the second support ring 204b. The support band 108 further includes longitudinal reinforcement 205. The support band distributes forces locally exerted on the tread 212 over a larger area and yields under pressure so as to contribute to formation of a contact patch between the tread 212 and the ground.

The tire 200 further comprises an inner ring structure including a first base ring 210a on the first lateral side206a and a second base ring 210b on the second lateral side 206b. The first and second base rings 210a, 210b are connected to the outer ring structure by a connecting structure comprising spokes 214 made of reinforced rubber strips. The spokes 214 include a first spoke 214a that wraps around the first support ring 204a and extends to the second base ring 210b and is secured thereto, and a second spoke 214b that extend from the second support ring 204b to the first base ring 210a (the "second spokes" in this embodiment).

The first and second spokes 214a, 214b extend generally linearly and are inclined with respect to the tire axis. The spokes are arranged in an X-shaped configuration when viewed from the cross-section. The spokes of the first and second sets cross each other in a plane perpendicular to the tire axis located centrally between the support rings and the base rings.

Unlike in the embodiment of FIGS. 1-4, the spokes 214 do not follow radial planes. Each first spoke 214a is connected with the first support ring 204a at its first outer node and with the second base ring 210b at its first inner node. Each second spoke 214b is connected with the second support ring 204b at its second outer node and with the first base ring 210a at its second inner node. Each first spoke 214a has the first inner and first outer nodes thereof located in radial planes intersecting at an intersection angle. Likewise, each second spoke 214b has the second inner and second outer nodes thereof located in radial planes intersecting at an intersection angle. In the illustrated embodiment, the intersection angle is the same for all spokes 214. The first spokes 214a are arranged in a first zigzag pattern generally extending around the truncated conical surface delimited by the first support ring 204a and the second base ring 210b, and the second spokes 214b are arranged in a second zigzag pattern generally extending around the truncated conical surface delimited by the second support ring 204b and the first base ring 210a. The first and second zigzag patterns may be staggered in circumferential direction such that the spokes do not interfere. The zigzag pattern of the first spokes thus defines a first mesh shaped overall as a first truncated conical surface delimited in axial direction by the first support ring 204a and the second base ring 210b. The zigzag pattern of the second spokes defines a second mesh shaped overall as a second truncated conical surface delimited in axial direction by the second support ring 204b and the first base ring 210a.

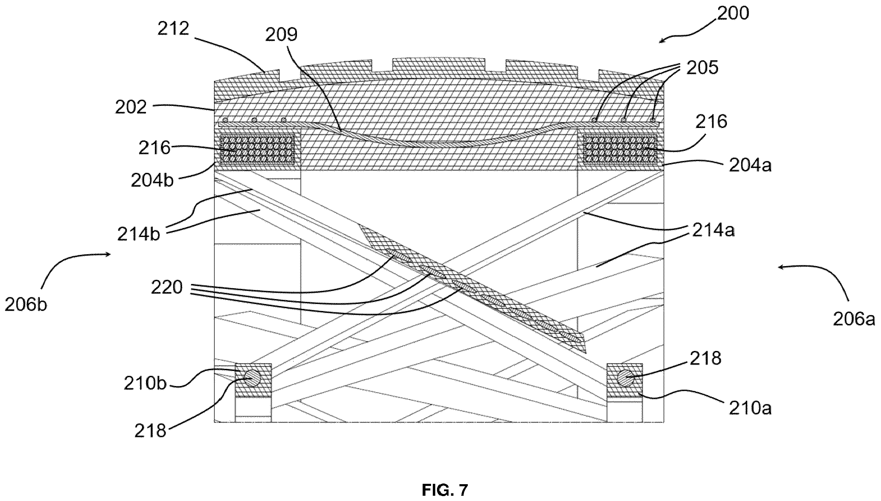

FIG. 7 shows a partial radial cross section of the tire of FIG. 5. The support rings 204a, 204b comprise each a core 216 embedded in rubber. The core 216 is preferably formed of one or more steel cables, more preferably, one or more rows of 11 cable wires, wherein the cable wire is sized about 2 mm. Also, the base rings 210a, 210b comprise cores made of metal, steel cables that are preferably surrounded with rubber.

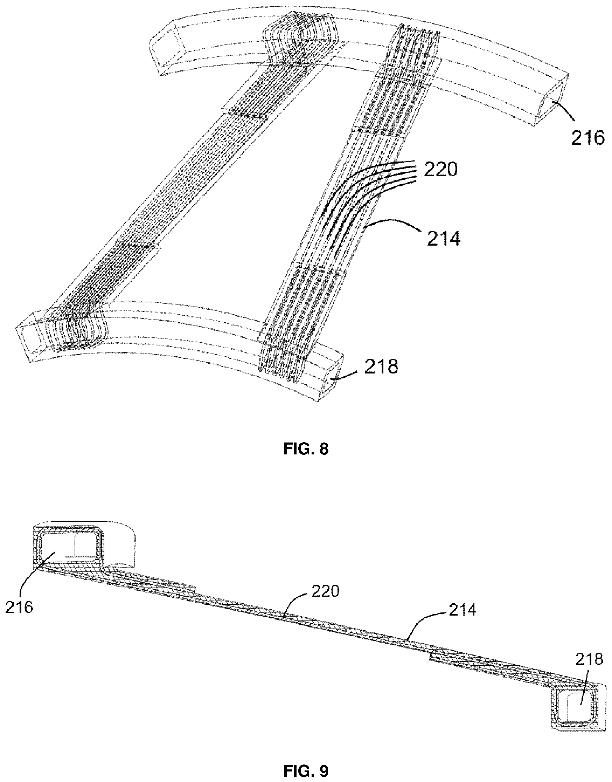

Referring to FIGS. 8 and 9, each spoke 214 comprises a strip of reinforced rubber. One or more reinforcement cords 220 run lengthwise across the reinforced rubber strip. At the inner and outer node, the reinforced rubber strip is folded around the support ring and the base ring. The folded-around ends of the rubber strip are laid alongside the median portion of the strip that spans between the support ring and the base ring. The folding (wrapping around) is carried out with the green (uncured) reinforced rubber strips when the tire is built up in a multi-component vulcanization mold. When the tire is cured, adjacent rubber components are bonded together. This is the case, in particular, between in the areas of overlap of the folded-around ends and the median portions of the rubber strips. Strong, tension-resistant bonds are thereby formed between the spokes 214 and the support rings 204a, 204b as well as between the spokes 214 and the base rings 210a, 210b.

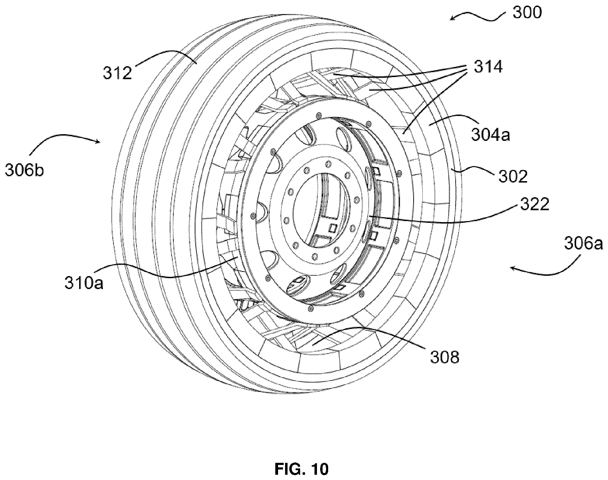

FIGS. 10-13 show an embodiment of wheel comprising a non-pneumatic tire 300 and a rim 322. The arrangement of the spokes 314 of tire 300 is similar to that of tire 200 described hereinabove. The first spokes 314a form a first zigzag pattern and the second spokes 314b form a second zigzag pattern. The outer ring structure 302 includes a first support ring 304a on the first side 306a of the tire 300 and a second support ring 304b on the second side 306b of the tire. The first and second support rings 304a, 304b extend circumferentially around the tire axis, one at an axial distance from the other. The outer ring structure 302 further comprises a support band 308 extending in the circumferential direction of the tire 300 and connecting the first support ring 304a with the second support ring 304b. The support band 308 maintains the first and second support rings 304a, 304b in substantially coaxial, parallel positions.

The support band 308 has a radially outer surface on which the tread is formed as a tread band 312. The tread band 312 may include tread features such as, e.g., grooves, ribs, blocks, lugs, sipes, studs, etc. The support band 308 includes a plurality of reinforcements 309 extending from the first support ring 304a to the second support ring 304b. The support band further includes one or more cushions 307 arranged between the reinforcement 309 and the tread band 312. The cushions 307 distribute forces locally exerted on the tread 312 over a larger area and yield under pressure so as to contribute to formation of a contact patch between the tread 312 and the ground. The optional cushions are formed of foam or sponge rubber. The support band 308 further includes longitudinal reinforcement 305.

The tire 300 further comprises an inner ring structure including a first base ring 310a on the first side 306a and a second base ring 310b on the second side 306b. The first and second spokes 314a, 314b extend generally linearly and are inclined with respect to the tire axis. The spokes are arranged in an X-shaped configuration. The first and second spokes cross each other in a plane perpendicular to the tire axis located centrally between the support rings and the base rings.

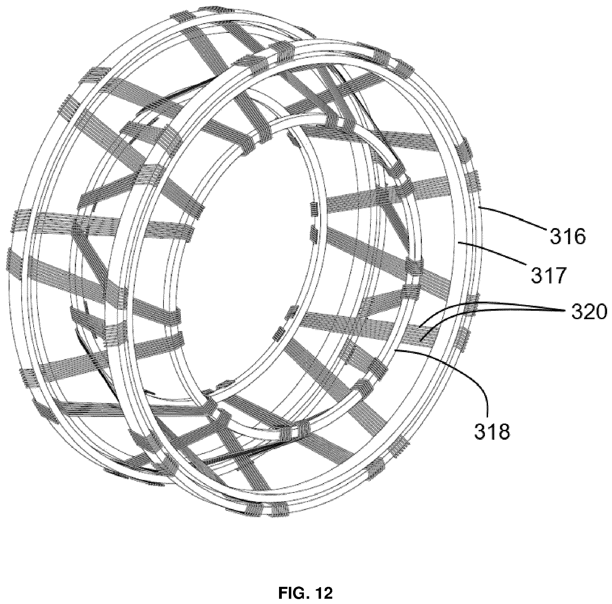

Each first spoke 314a is connected with the first support ring 304a and with the second base ring 310b. Each second spoke 314b is connected with the second support ring 304b and with the first base ring 310a. As shown in Figure 12, the first spokes 214a and the second spokes 314b are arranged in a first zigzag pattern and a second zigzag pattern. The first and second zigzag patterns are staggered in circumferential direction such that the first spokes 314a do not interfere with the second spokes 314b.

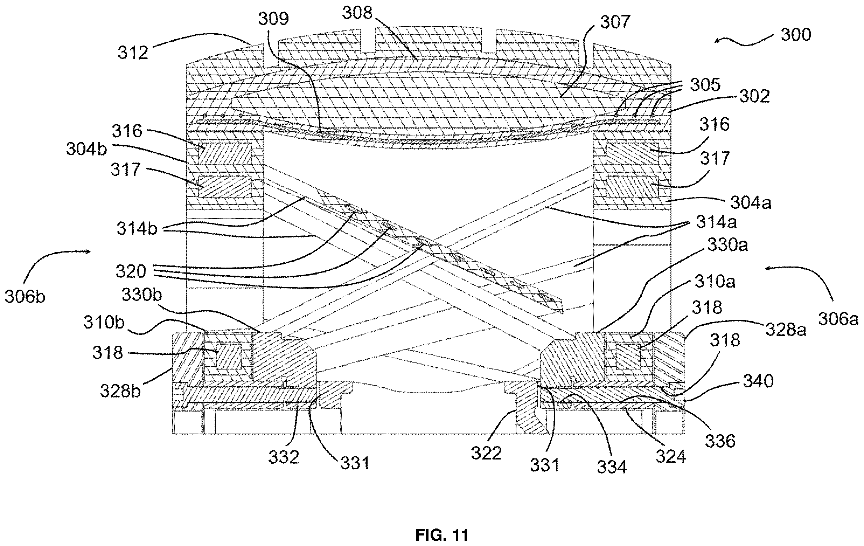

FIG. 11 shows a partial radial cross section of the wheel of FIG. 10. The support rings 304a, 304b each comprise two metal cores 316, 317 embedded in rubber. The base rings 310a, 310b comprise respective metal cores 318 surrounded with rubber. Each spoke comprises a strip of reinforced rubber. Reinforcement cords 320 run lengthwise across the reinforced rubber strip of each spoke. The reinforced rubber strip has a first end that is folded around the radially outward core 316 of the support ring, and a second end that is folded around the base ring.

FIG. 13 is a perspective view of the rim 322 of the wheel of FIG. 10. The rim 322 comprises a circular cylindrical rim drum 324 and a disk 326 for mounting the rim to an axle. As can be seen in FIGS. 10 and 11, the rim drum 324 supports the first and second base rings 310a, 310b. The rim 322 comprises a first lateral flange 328a arranged on the first side 306a of the wheel 300 and a second flange 328b arranged on the second side 306b thereof. The first and second flanges provide first and second axially outer abutment surfaces for the base rings 31 0a, 310b. First and second axially inner abutment surfaces are provided by a first and a second series of clamping jaws 330a, 330b.

The rim drum 324 comprises a first and a second series of openings 331 along first and the second flange. Each of these openings 331 is configured to accommodate the nut base 332 of a clamping jaw. The nut base 332 comprises an inside threaded hole 334 that is perpendicular to the insertion direction of the nut base 332. When the nut base 332 is in place, the inside threaded hole 334 is in alignment with an axially oriented bore 336 in the rim drum 324. The first and second flanges comprise corresponding bores 338 that are aligned with the bores 336 in the rim drum. The first and second base rings are clamped between the respective clamping jaws and flange with bolts 340.

The axial extents of the openings 331 are somewhat greater than the axial extents of the base nuts 332. When the bolts 340 are fastened, the clamping jaws 330a, 330b are moved axially outwards, pushing the first and second base rings 310a, 310b to axially more outward positions. This leads to pretension of the spokes 314.

In the illustrated embodiment, both flanges 328a and 328b are removable. The tire may be slid on the rim 322 when the flanges 328a, 328b and the clamping jaws 330a, 330b are removed. When the tire is in place, the flanges and the clamping jaws are mounted and bolted.

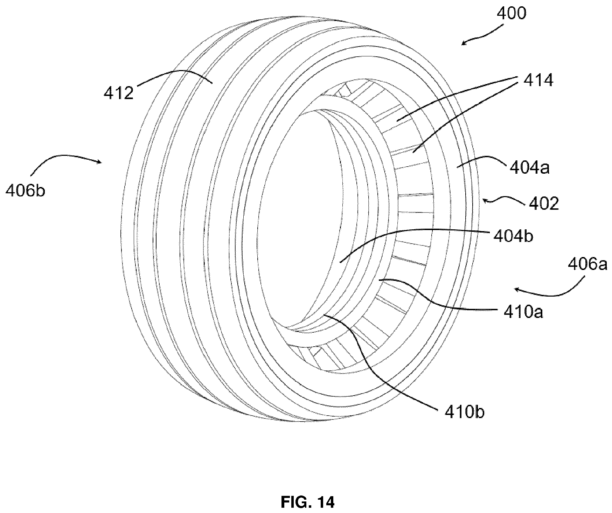

FIGS. 14-17 show a non-pneumatic tire 400 according to a further embodiment. The non-pneumatic tire 400 comprises an outer ring structure 402 with a first support ring 404a on the first lateral side 406a of the tire 400 and a second support ring 404b on the second lateral side 406b of the tire. The first and second support rings 404a, 404b extend circumferentially around the tire axis, one at an axial distance from the other. The outer ring structure 402 further comprises a support band extending in the circumferential direction of the tire 400 and connecting the first support ring 404a with the second support ring 404b. The support band maintains the first and second support rings 404a, 404b in substantially coaxial, parallel positions.

The support band has a radially outer surface formed by a tread band 412. The support band includes reinforcement 409 extending between the first and second support rings 404a, 404b. The support band further includes one or more cushions 407 arranged between the reinforcement 409 and the tread band 412. The cushions 407 distribute forces locally exerted on the tread 412 over a larger area and yield under pressure so as to contribute to formation of a contact patch between the tread 412 and the ground. The support band further includes longitudinal reinforcement 405.

The non-pneumatic tire 400 further comprises an inner ring structure including a first base ring 410a on the first lateral side 406a and a second base ring 410b on the second lateral side 406b. The first and second base rings 410a, 410b are connected to the outer ring structure by a connecting structure comprising spokes 414 made of reinforced rubber. The spokes 414 can be divided in two sets: a first set comprising the spokes 414a, the "first spokes", that extend from the first support ring 404a to the first base ring 41 0a, and a second set comprising the spokes 414b, the "second spokes", that extend from the second support ring 404b to the second base ring 410b.

The spokes 414 of the first and second sets are slanted with respect to the tire axis. The spokes 414 are arranged in a V-shaped configuration. In the illustrated embodiment, in circumferential direction around the tire axis, the spokes of the first set alternate with the spokes of the second set. However, since the spokes do not cross, the first and second spokes could also pairwise be arranged axially facing each other. In the illustrated embodiment, there are 36 spokes 414 in total, including 18 first spokes 414a and 18 second spokes 414b. The spokes are uniformly distributed in circumferential direction and the angular separation α between two neighboring first spokes 414a or between two neighboring second spokes 414b amounts to 20°.

As in the embodiment of FIGS. 1-4, the spokes 414 follow radial planes. Each first spoke 414a has a first end connected with the first support ring 404a and a second end connected with the first base ring 410a. Each second spoke 414b is connected with the second support ring 404b at its first end and with the second base ring 410b at its second end.

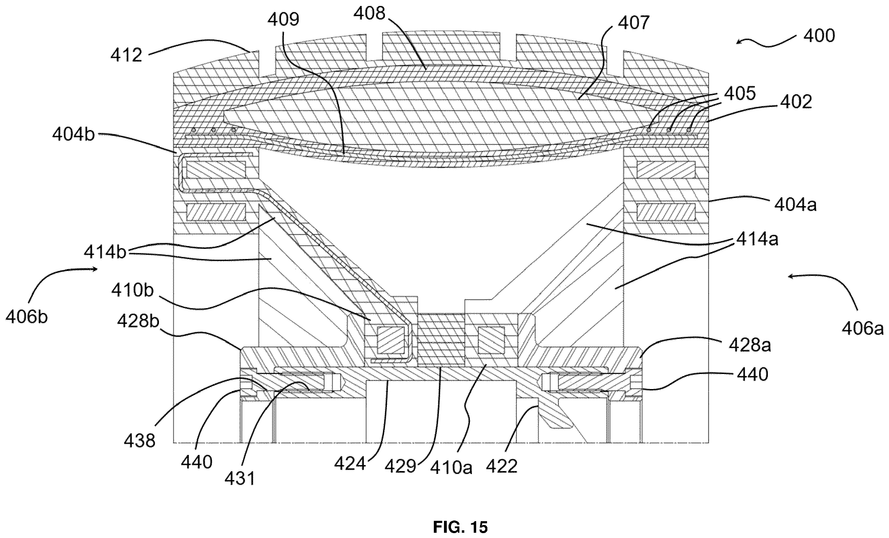

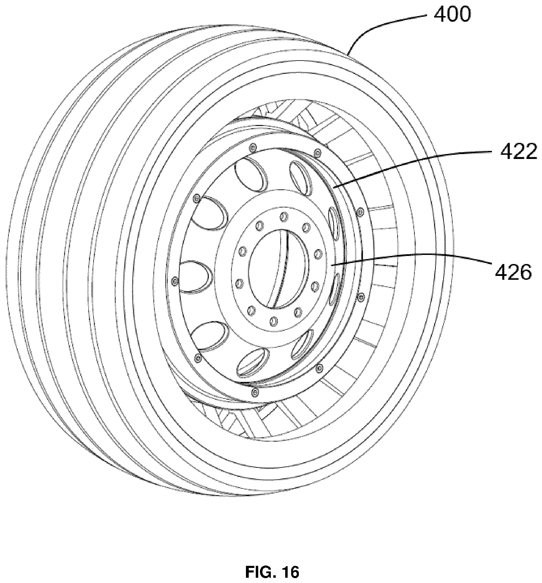

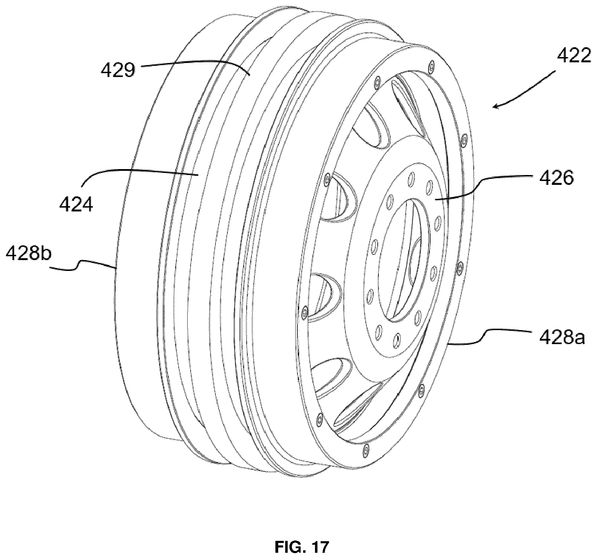

FIG. 16 is a perspective view of the tire 400 mounted on a rim 422 and FIG. 17 shows the rim 422 without the tire. The rim 422 comprises a circular cylindrical rim drum 424 and a disk 426 for mounting the rim to an axle. As best seen in FIG. 15, the rim drum 424 supports the first and second base rings 410a, 410b. The rim 422 comprises a first lateral flange 428a arranged on the first side 406a of the wheel and a second flange 428b arranged on the second side 406b thereof. The first and second flanges provide first and second axially outer abutment surfaces for the base rings 410a, 410b. First and second axially inner abutment surfaces are provided by a median rim ring 429.

The rim drum 424 comprises a series of axially oriented inside threaded holes 431 distributed along the lateral circumferential edges of the rim drum 424. The first and second flanges 428a, 428b comprise corresponding bores 438 that are aligned with the threaded holes 431 in the rim drum, such that the first and second flanges 428a, 428b may be fixed on the rim drum 424 by bolts 340.

The first and second base rings are clamped between the respective clamping jaws and flange with bolts 340.

In the illustrated embodiment, both flanges 428a and 428b are removable. The tire may be slid on the rim 422 when at least one of the flanges 428a, 428b is removed. The median rim ring 429 is arranged between the base rings 410a, 410b before the tire is placed on the rim drum 424. The base rings 410a, 410b and the median rim ring 429 are then slid into abutment with one of the flanges 428a or 428b. Finally, the other flange is mounted, in such a way that the base rings 410a, 410b and the median rim ring 429 are clamped between the flanges 428a, 428b.

In any of the above-described embodiments, the cores of the support and base rings could be made from metal, e.g., steel, aluminum, etc., from reinforced rubber, from plastic, or from a composite material (e.g., reinforced rubber, fiber-reinforced plastic, etc.) The reinforcement of the rubber spokes, the support bands, etc. may be made of steel cords and/or cords formed from nylon fiber, polyester fiber, fiber glass, carbon fiber, aramid fiber, glass fiber, polyethylene fiber, polyethylene terephthalate fiber, or other reinforcement materials. Different reinforcement materials could be combined. It is worthwhile noting that a "cord" may include one or plural strands. The configuration of the tire structure, in particular the base rings, the spokes, the support rings and the support band, as well as the choice of materials may depend on the envisaged use of the tire and, in particular, the intended load-bearing capability.

## Claims

1. A non-pneumatic tire having a tire axis, a first side and a second side, the nonpneumatic tire (100) comprising:
an outer ring structure (102) with a tread (112) extending circumferentially around the tire axis, the outer ring structure extending from the first side (106a) to the second side (106b) and comprising a first support ring (104a) on the first side and a second support ring (104b) on the second side, the first and second support rings being substantially coaxial around the tire axis;
an inner ring structure, the inner ring structure comprising a first base ring (110a) on the first side and a second base ring (110b) on the second side, the first and second base rings being substantially coaxial around the tire axis;
a connecting structure effective to transfer load from the inner ring structure to the outer ring structure, the connecting structure including first and second spokes (114a, 114b) made of or comprising reinforced rubber;
each of the first spokes (114a) extending from the first support ring (104a) to the second base ring (110b), and being connected with the first support ring and with the second base rings, and
each of the second spokes (114b) extending from the second support ring (104b) to the first base ring (110a), and being connected with the second support ring and with the first and second base rings;
wherein the first and second spokes (114a, 114b) are inclined with respect to the tire axis.

2. The non-pneumatic tire of claim 1, wherein the first spokes (114a) alternate with the second spokes (114b) in circumferential direction around the tire axis.

3. The non-pneumatic tire of claim 1 or 2, wherein the first and second base rings (110a, 110b) are axially movable one with respect to the other and wherein tension within the first and second spokes (114a, 114b) is adjustable by axially moving the first and second base rings (110a, 110b) one with respect to the other.

4. The non-pneumatic tire of at least one of the previous claims, wherein the first and second spokes (114a, 114b) have inclination angles between 10 and 60° with respect to the tire axis; and/or wherein the first and second spokes (114a, 114b) extend along radial planes intersecting at the tire axis.

5. The non-pneumatic tire of at least one of the previous claims, wherein the outer ring structure comprises an annular support band (108) extending from the first support ring (104a) to the second support ring (104b), and, optionally, wherein the annular support band (108) comprises one or more reinforcements, each reinforcement having a first lateral end secured to the first support ring (104a) and a second lateral end secured to the second support ring (104b).

6. The non-pneumatic tire of at least one of the previous claims, wherein each one of the spokes (114a, 114b) comprises a reinforced rubber strip; and/or wherein the first and second support rings (104a, 104b) are resilient.

7. A vehicle wheel, the wheel having a wheel axis, a first side and a second side, the wheel comprising:
a rim coaxial with the wheel axis;
an outer ring structure with a tread extending circumferentially around the wheel axis, the outer ring structure comprising a first support ring on the first side and a second support ring on the second side, the first and second support rings being substantially coaxial around the tire axis;
an inner ring structure, the inner ring structure comprising a first base ring on the first side and a second base ring on the second side, the first and second base rings mounted on the rim;
a connecting structure effective to transfer load from the inner ring structure to the outer ring structure, the connecting structure including first and second spokes made of reinforced rubber,
each of the first spokes extending from the first support ring to one of the first and second base rings, and being connected with the first support ring and with the second base ring, and
each of the second spokes extending from the second support ring to the first base ring, and being connected with the second support ring and with the first base ring,
wherein the first and second spokes are inclined with respect to the wheel axis.

8. The vehicle wheel of claim 7, wherein the rim comprises a first axially inner abutment and a first axially outer abutment for securing the first base ring in a first axial position on the rim and wherein the rim comprises a second axially inner abutment and a second axially outer abutment for securing the second base ring in a second axial position on the rim.

9. The vehicle wheel as claimed in claim 7 or 8, wherein the first and second spokes are pretensioned when the first and second base rings are secured in the first and second axial positions; and/or wherein the first and second support ring are resilient.

10. The vehicle wheel as claimed in at least one of the claims 7 to 9, wherein the rim comprises a first flange arranged on the first lateral side and a second flange arranged on the second lateral side, at least one of the first and second flanges being removable, the first and second flange providing said first and second axially outer abutment surface.

11. The vehicle wheel as claimed in at least one of the claims 7 to 10, comprising first clamps that secure the first base ring between the first axially inner abutment and the first axially outer abutment and second clamps that secure the second base ring between the second axially inner abutment and the second axially outer abutment.

12. The vehicle wheel of at least one of the claims 7 to 11, wherein the outer ring structure comprises an annular support band extending from the first support ring to the second support ring, and, optionally, wherein the annular support band comprises an annular reinforcement having a first lateral end secured to the first support ring and a second lateral end secured to the second support ring.

13. A wheel having a wheel axis, a first lateral side and a second lateral side, the wheel comprising:
a rim coaxial with the wheel axis;
an annular tread ring including a support band, wherein the support band comprises one or more reinforcements having a first end secured to a first support ring and a second end secured to a second support ring, wherein the first and second support rings are substantially coaxial around the wheel axis, wherein the first and second support rings are resilient;
a first base ring on the first side and a second base ring on the second side, the first and second base rings being mounted on the rim;
and a connecting structure connecting the first and second support rings to a respective first and second base rings, and wherein the connecting structure is loaded in pretension when the first and second base rings are mounted to the rim.

14. The wheel of claim 13 wherein the connecting structure including a plurality of spokes connected to one of the support rings and extending to one of the first and second base rings and being connected thereto, wherein the spokes are loaded in pretension when mounted upon the rim.

15. The wheel of claim 13 or 14 wherein the one or more reinforcements extend in the axial direction.
